# EUROPEAN PATENT APPLICATION

(11) **EP 4 340 492 A1**
(43) Date of publication of application: **20.03.2024**
(21) Application number: 21941984.3
(22) Date of filing: 14.05.2021
(51) Int. Cl.: H04W 72/04, H04W 28/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2021/018502
(87) International publication number: WO 2022/239254

(57) **Abstract**

A terminal according to an aspect of the present disclosure includes: a receiving section that receives configuration information related to one or more transmission configuration indication (TCI) states for one or more control resource sets (CORESETs) and receives, using the one or more CORESETs, downlink control information scheduling a plurality of times of physical uplink shared channel repetition; and a control section that controls transmission of the plurality of times of physical uplink shared channel repetition on the basis of two values of parameters in the downlink control information. According to an aspect of the present disclosure, transmission of uplink channel repetition can be appropriately performed, with respect to configuration of a PDCCH.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is under study that a plurality of times of repetition transmission of an uplink channel are performed for one transmission/reception point (TRP) or a plurality of TRPs.

For future radio communication systems, it is under study that a terminal receives a physical downlink control channel (PDCCH) on the basis of configuration of the PDCCH and a control resource set (CORESET). For future radio communication systems, a case is also under study that at least one of one or two transmission configuration indication (TCI) states and repetition is used for reception of the PDCCH. For at least one case of the above, how a UE performs transmission of uplink channel repetition is not clear. Unless the transmission is appropriately performed, degradation in quality of notification, throughput reduction, and/or the like may occur.

In view of this, the present disclosure has one object to provide a terminal, a radio communication method, and a base station that appropriately perform transmission of uplink channel repetition, with respect to configuration of a PDCCH.

### Solution to Problem

A terminal according to an aspect of the present disclosure includes: a receiving section that receives configuration information related to one or more transmission configuration indication (TCI) states for one or more control resource sets (CORESETs) and receives, using the one or more CORESETs, downlink control information scheduling a plurality of times of physical uplink shared channel repetition; and a control section that controls transmission of the plurality of times of physical uplink shared channel repetition on the basis of two values of parameters in the downlink control information.

### Advantageous Effects of Invention

According to an aspect of the present disclosure, transmission of uplink channel repetition can be appropriately performed, with respect to configuration of a PDCCH.

### Brief Description of Drawings

[FIG. 1] FIGS. 1A and 1B are each a diagram to show an example of repetition transmission of a PUSCH.
[FIG. 2] FIG. 2 is a diagram to show an example of repetition transmission of a PUSCH for multi-TRP.
[FIG. 3] FIGS. 3A to 3C are diagrams to show examples of a single PUSCH transmission, repetition transmission of a PUSCH for a single TRP, and repetition transmission of a PUSCH for a plurality of TRPs.
[FIG. 4] FIGS. 4A and 4B are each a diagram to show an example of a correspondence between a plurality of SRIs and a plurality of transmissions in repetition transmission.
[FIG. 5] FIGS. 5A and 5B are diagrams to show examples of an SRS resource set/SRS resources corresponding to a first SRS resource set/second SRS resource set.
[FIG. 6] FIG. 6 is a diagram to show an example of Option 2-1 according to a first embodiment.
[FIG. 7] FIG. 7 is a diagram to show an example of Option 2-2 according to the first embodiment.
[FIG. 8] FIGS. 8A and 8B are each a diagram to show an example of Option 2-3 according to the first embodiment.
[FIG. 9] FIG. 9 is a diagram to show an example of Option 2 according to a second embodiment.
[FIG. 10] FIGS. 10A and 10B are each a diagram to show an example of Variation 1 according to the second embodiment.
[FIG. 11] FIG. 11 is a diagram to show an example of Variation 2 according to the second embodiment.
[FIG. 12] FIGS. 12A and 12B are each a diagram to show an example of Variation 3 according to the second embodiment.
[FIG. 13] FIG. 13 is a diagram to show an example of Option 2 according to a third embodiment.
[FIG. 14] FIG. 14 is a diagram to show an example of Option 2 according to a fourth embodiment.
[FIG. 15] FIG. 15 is a diagram to show an example of Option 2 according to a fifth embodiment.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.

### Description of Embodiments

### (TCI, Spatial Relation, QCL)

For NR, it is under study that reception processing (for example, at least one of reception, de-mapping, demodulation, and decoding) and transmission processing (for example, at least one of transmission, mapping, precoding, modulation, and coding) of at least one of a signal and channel (expressed as signal/channel) in a UE are controlled based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel / reference signal (RS) or simply as a target, and another signal described above may be referred to as a reference reference signal (reference RS) and a source RS or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a demodulation reference signal (DMRS), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Repetition Transmission)

In Rel. 15, repetition transmission is supported in data transmission. For example, a base station (a network (NW), a gNB) repeats transmission of DL data (for example, a downlink shared channel (PDSCH)) a certain number of times. Alternatively, a UE repeats transmission of UL data (for example, an uplink shared channel (PUSCH)) a certain number of times.

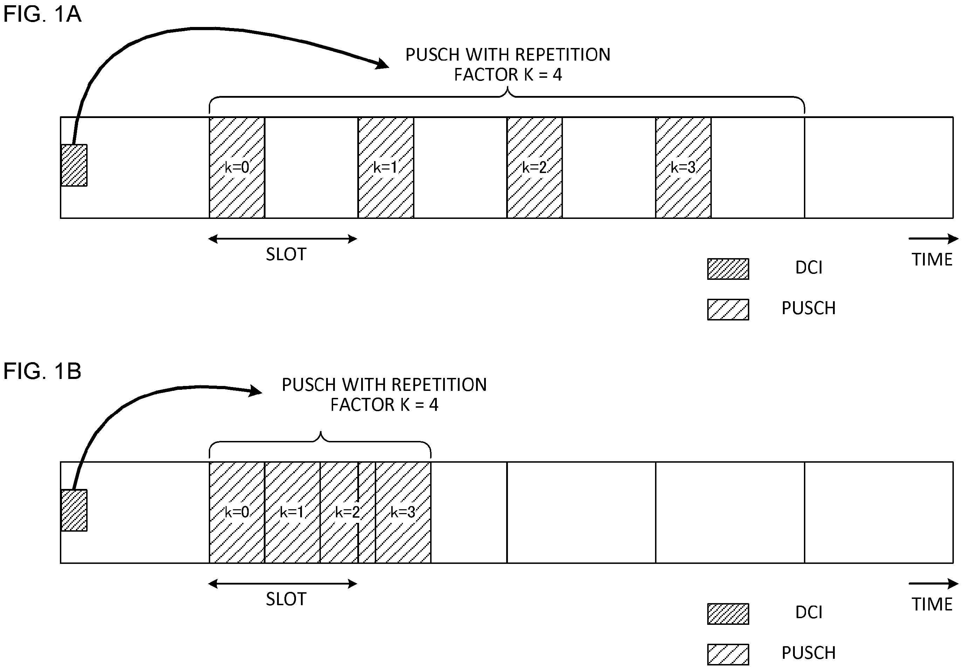

FIG. 1A is a diagram to show an example of repetition transmission of a PUSCH. FIG. 1A shows an example in which PUSCHs for a certain number of times of repetition are scheduled by a single piece of DCI. The number of times of repetition is also referred to as a repetition factor K or an aggregation factor K.

In FIG. 1A, the repetition factor K = 4, but the value of K is not limited to this. The n-th repetition may also be referred to as the n-th transmission occasion or the like, and may be identified by a repetition index k (0 ≤ k ≤ K - 1). FIG. 1A shows the repetition transmission of the PUSCH (for example, dynamic-grant based PUSCH) dynamically scheduled by the DCI, but the embodiments may be applied to repetition transmission of a configured-grant based PUSCH.

For example, in FIG. 1A, a UE semi-statically receives information (for example, aggregationFactorUL or aggregationFactorDL) indicating the repetition factor K through higher layer signaling. Here, for example, the higher layer signaling may be any one or combinations of RRC (Radio Resource Control) signaling, MAC (Medium Access Control) signaling, broadcast information, and the like.

For example, the MAC signaling may use MAC control elements (MAC CE), MAC PDUs (Protocol Data Units), and the like. For example, the broadcast information may be master information blocks (MIBs), system information blocks (SIBs), minimum system information (RMSI (Remaining Minimum System Information)), and the like.

The UE controls PDSCH reception processing (for example, at least one of reception, de-mapping, demodulation, and decoding) or PUSCH transmission processing (for example, at least one of transmission, mapping, modulation, and coding) in K consecutive slots, on the basis of at least one of the following field values (or information indicated in the field value) in the DCI:
- Allocation of time domain resources (for example, a start symbol, the number of symbols in each slot, and the like);
- Allocation of frequency domain resources (for example, a certain number of resource blocks (RBs), a certain number of resource block groups (RBGs));
- Modulation and coding scheme (MCS) index;
- Configuration of a demodulation reference signal (DMRS) of the PUSCH;
- Spatial relation information (spatial relation info) of the PUSCH, or a state of transmission configuration indication (or transmission configuration indicator (TCI)) (TCI state (TCI-state)).

Identical symbol allocation may be applied between the K consecutive slots. FIG. 1A shows a case where the PUSCH in each slot is allocated to a certain number of symbols from the head of the slot. The identical symbol allocation between the slots may be determined as described in the time domain resource allocation above.

For example, the UE may determine the symbol allocation in each slot on the basis of a start symbol S and the number of symbols L (for example, Start and Length Indicator (SLIV)) determined based on a value m of a certain field (for example, TDRA field) in the DCI. Note that the UE may determine the first slot on the basis of K2 information determined based on the value m of the certain field (for example, TDRA field) in the DCI.

Meanwhile, between the K consecutive slots, redundancy versions (RV) to be applied to TBs based on identical data may be identical or at least partially different from each other. For example, the RV to be applied to the TB in the n-th slot (transmission occasion, repetition) may be determined based on a value of a certain field (for example, RV field) in the DCI.

When resources allocated in the K consecutive slots are different from, in communication direction in at least one symbol, a UL, DL, or flexible in each slot specified by at least one of uplink/downlink communication direction indication information (for example, "TDD-UL-DL-ConfigCommon", "TDD-UL-DL-ConfigDedicated" of an RRC IE) for TDD control and a slot format indicator in the DCI (for example, DCI format 2_0), a resource in a slot including the symbol may be configured not to be transmitted (or not to be received).

In Rel. 15, as shown in FIG. 1A, a PUSCH is repeatedly transmitted over a plurality of slots (in a unit of slot). In Rel. 16 or later versions, repetition transmission of a PUSCH is assumed to be performed in a unit (for example, a unit of subslot, a unit of mini-slot, or a unit of a certain number of symbols) shorter than a slot (see FIG. 1B).

In FIG. 1B, the repetition factor K = 4, but the value of K is not limited to this. The n-th repetition may also be referred to as the n-th transmission occasion or the like, and may be identified by the repetition index k (0 ≤ k ≤ K - 1). FIG. 1B shows repetition transmission of a PUSCH (for example, dynamic-grant based PUSCH) dynamically scheduled by DCI, but the embodiments may be applied to repetition transmission of a configured-grant based PUSCH.

The UE may determine symbol allocation for a PUSCH transmission (for example, PUSCH with k = 0) in a certain slot on the basis of a start symbol S and the number of symbols L (for example, StartSymbol and length) determined based on a value m of a certain field (for example, TDRA field) in the DCI for the PUSCH. Note that the UE may determine the certain slot on the basis of Ks information determined based on the value m of the certain field (for example, TDRA field) in the DCI.

The UE may dynamically receive, through downlink control information, information (for example, numberofrepetitions) indicating the repetition factor K. The repetition factor may be determined based on the value m of the certain field (for example, TDRA field) in the DCI. For example, a table may be supported in which a correspondence relation between a bit value, the repetition factor K, the start symbol S, and the number of symbols L notified in the DCI is defined.

The slot-based repetition transmission shown in FIG. 1A may be referred to as repetition transmission type A (for example, PUSCH repetition Type A), and the sub-slot based repetition transmission shown in FIG. 1B may be referred to as repetition transmission type B (for example, PUSCH repetition Type B).

The UE may be configured with application of at least one of the repetition transmission type A and the repetition transmission type B. For example, the repetition transmission type to be applied to the UE may be notified from a base station to the UE through higher layer signaling (for example, PUSCHRepTypeIndicator).

Either of the repetition transmission type A or the repetition transmission type B may be configured for the UE for each DCI format scheduling a PUSCH.

For example, regarding a first DCI format (for example, DCI format 0_1), when higher layer signaling (for example, PUSCHRepTypeIndicator-AorDCIFormat0_1) is configured to the repetition transmission type B (for example, PUSCH-RepTypeB), the UE applies the repetition transmission type B to PUSCH repetition transmission scheduled by the first DCI format. Otherwise (for example, when PUSCH-RepTypeB is not configured or PUSCH-RepTypA is configured), the UE, the UE applies the repetition transmission type A to PUSCH repetition transmission scheduled by the first DCI format.

In Rel. 16 or later versions, performing dynamic switch between a single PUSCH transmission and repetition transmission of a PUSCH is under study.

For the UE, when a higher layer parameter (for example, pusch-TimeDomainAllocationListDCI-0-1-r16 or pusch-TimeDomainAllocationListDCI-0-2-r16) related to the time domain allocation for a PUSCH is configured, the number of times of repetition (for example, 1, 2, 3, 4, 7, 8, 12, or 16) may be configured using a parameter (for example, numberOfRepetitions-r16) related to the number of times of repetition of the PUSCH, the parameter included in the higher layer parameter. Based on a time domain resource allocation field in DCI, the UE may determine the number of times of repetition of the PUSCH scheduled by the DCI. When the number of times of repetition is configured/specified to one, the UE may perform the single PUSCH transmission.

### (Spatial Relation for SRS and PUSCH)

In Rel-15 NR, a UE may receive information to be used in transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with a certain number of (for example, one or more or a plurality of) SRS resources (the certain number of SRS resources may be grouped). Each SRS resource may be identified by an SRS resource indicator (SRI) or an SRS resource ID (Identifier).

The SRS resource set information may include information about an SRS resource set ID (SRS-ResourceSetId), a list of SRS resource IDs (SRS-ResourceId) to be used in the resource set, an SRS resource type (for example, any one of periodic SRS, semi-persistent SRS, and aperiodic CSI (Aperiodic SRS)), and a usage of SRS.

Here, the SRS resource type may indicate any one of periodic SRS (P-SRS), semi-persistent SRS (SP-SRS), and aperiodic CSI (Aperiodic SRS (A-SRS)). Note that the UE may transmit a P-SRS and SP-SRS periodically (or periodically after activation), and may transmit an A-SRS on the basis of an SRS request in the DCI.

The usage (an RRC parameter "usage", L1 (Layer-1) parameter "SRS-SetUse") may be, for example, beam management (beamManagement), codebook (CB), noncodebook (NCB), antenna switching, and the like. An SRS of the codebook (CB) or noncodebook (NCB) usage may be used for determination of a precoder for codebook-based or non-codebook-based PUSCH transmission based on an SRI.

For example, for the codebook-based transmission, the UE may determine a precoder for PUSCH transmission on the basis of an SRI, a transmitted rank indicator (TRI), and a transmitted precoding matrix indicator (TPMI). For the non-codebook-based transmission, the UE may determine a precoder for PUSCH transmission on the basis of an SRI.

The SRS resource information may include an SRS resource ID (SRS-ResourceId), the number of SRS ports, an SRS port number, a transmission Comb, SRS resource mapping (for example, time and/or frequency resource position, resource offset, periodicity of resource, the number of times of repetition, the number of SRS symbols, SRS bandwidth, and the like), hopping-related information, an SRS resource type, a sequence ID, spatial relation information of SRS, and the like.

The spatial relation information of SRS (for example, an RRC information element "spatialRelationInfo") may indicate spatial relation information between a certain reference signal and an SRS. The certain reference signal may be at least one of a synchronization signal/broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of SRS may include, as an index of the certain reference signal, at least one of an SSB index, a CSI-RS resource ID, and an SRS resource ID.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of SRS may include a serving cell index, a BWP index (BWP ID), and the like corresponding to the certain reference signal.

For a certain SRS resource, when spatial relation information related to an SSB or CSI-RS and the SRS is configured, the UE may transmit the certain SRS resource by using a spatial domain filter (spatial domain transmission filter) the same as a spatial domain filter (spatial domain reception filter) for reception of the SSB or CSI-RS. In this case, the UE may assume that a UE receive beam of the SSB or CSI-RS and a UE transmit beam of the SRS are the same.

For a certain SRS (target SRS) resource, when spatial relation information related to another SRS (reference SRS) and the SRS (target SRS) is configured, the UE may transmit the target SRS resource by using a spatial domain filter (spatial domain transmission filter) the same as a spatial domain filter (spatial domain transmission filter) for transmission of the reference SRS. In other words, in this case, the UE may assume that a UE transmit beam of the reference SRS and a UE transmit beam of the target SRS are the same.

Based on a value of a certain field (for example, SRS resource indicator (SRI) field) in DCI (for example, DCI format 0_1), the UE may determine spatial relation of a PUSCH scheduled by the DCI. Specifically, for the PUSCH transmission, the UE may use the spatial relation information of SRS resource (for example, an RRC information element "spatialRelationInfo") determined based on the value of the certain field (for example, SRI).

When the codebook-based transmission is used for the PUSCH, the UE may be configured, by RRC, with two SRS resources per SRS resource set and may be indicated, by the DCI (SRI field of one bit), one of the two SRS resources. When the non-codebook-based transmission is used for the PUSCH, the UE may be configured, by the RRC, with four SRS resources per SRS resource set and may be indicated, by the DCI (SRI field of two bits), one of the four SRS resources.

### (TPMI and Transmission Rank)

In Rel. 16, it is under study that a transmitted precoding matrix indicator (TPMI) and a transmission rank for codebook-based PUSCH transmission are specified in a specific field (for example, precoding information and number-of-layer field) included in downlink control information (for example, DCI format 0_1).

A precoder that the UE uses for the codebook-based PUSCH transmission may be selected from an uplink codebook having the number of antenna ports equal to a value configured using a higher layer parameter (for example, nrofSRS-Ports) configured for an SRS resource.

The size (the number of bits) of the specific field is variable depending on the number of antenna ports (for example, the number of ports indicated by nrofSRS-Ports above) for a PUSCH and some higher layer parameters.

The specific field may be zero bits when a higher layer parameter (for example, txConfig) configured for the UE is configured to noncodebook (nonCodebook).

For one antenna port, when the higher layer parameter (for example, txConfig) configured for the UE is configured to codebook, the specific field may be zero bits.

For four antenna ports, when the higher layer parameter (for example, txConfig) configured for the UE is configured to codebook, the specific field may have a bit length of two to six bits on the basis of at least one of another higher layer parameter configured for the UE and whether there is a transform precoder (enabled or disabled).

For two antenna ports, when the higher layer parameter (for example, txConfig) configured for the UE is configured to codebook, the specific field may have a bit length of one to four bits on the basis of at least one of another higher layer parameter configured for the UE and whether there is a transform precoder (enabled or disabled).

Such another higher layer parameter may be at least one of a parameter (for example, ul-FullPowerTransmission) to specify a full power transmission mode for a UL, a parameter (for example, maxRank) indicating the maximum value of the transmission rank of the UL, a parameter (for example, codebookSubset) indicating a subset of a certain precoding matrix indicator (PMI), and a parameter (for example, transformPrecoder) to specify a transform precoder.

### (Multi-TRP PDSCH)

For NR, it is under study that one or a plurality of transmission/reception points (TRPs) (multi-TRP (multi TRP (MTRP))) perform a DL transmission to a UE by using one or a plurality of panels (multi-panel). It is also under study that a UE performs a UL transmission to one or a plurality of TRPs by using one or a plurality of panels.

Note that the plurality of TRPs may correspond to the same cell identifier (ID) or may correspond to different cell IDs. The cell ID may be a physical cell ID or may be a virtual cell ID.

TRPs of multi-TRP (for example, TRPs #1 and #2) may be connected to each other via an ideal/non-ideal backhaul, and information, data, and the like may be exchanged between the TRPs. Each of the TRPs of multi-TRP may transmit a different codeword (Code Word (CW)) and a different layer. As one mode of the multi-TRP transmission, non-coherent joint transmission (NCJT) may be used.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that it may be defined that a plurality of PDSCHs (multi-PDSCH) subjected to the NCJT partially or completely overlap in at least one of time and frequency domains. In other words, the first PDSCH from the first TRP and the second PDSCH from the second TRP may overlap in at least one of time and frequency resources.

The first PDSCH and second PDSCH may be assumed not to be in a quasi-co-location (QCL) relation (assumed to be not quasi-co-located). Reception of multi-PDSCH may be interpreted as simultaneous reception of PDSCHs not of a certain QCL type (for example, QCL type D).

A plurality of PDSCHs (which may be referred to as multi-PDSCH (multiple PDSCHs)) from multi-TRP may be scheduled using one piece of DCI (single-DCI, single-PDCCH) (single-master mode, multi-TRP based on single-DCI (single-DCI based multi-TRP)). Each of the plurality of PDSCHs from multi-TRP may be scheduled using a respective one of a plurality of pieces of DCI (multi-DCI, multi-PDCCH (multiple PDCCHs)) (multi-master mode, multi-TRP based on multi-DCI (multi-DCI based multi-TRP)).

It is under study to support PDSCH (transport block (TB) or codework (CW)) repetition over multi-TRP in URLLC for multi-TRP. It is under study to support a scheme (URLLC scheme, for example, scheme 1, 2a, 2b, 3, 4) for repetition over multi-TRP in the frequency domain or layer (spatial) domain or time domain. In scheme 1, multi-PDSCH from multi-TRP is multiplexed by space division multiplexing (SDM). In schemes 2a and 2b, a PDSCH from multi-TRP is multiplexed by frequency division multiplexing (FDM). In scheme 2a, the redundancy version (RV) is the same for TRPs of multi-TRP. In scheme 2b, the RV may be the same or different for TRPs of multi-TRP. In schemes 3 and 4, multi-PDSCH from multi-TRP is multiplexed by time division multiplexing (TDM). In scheme 3, multi-PDSCH from multi-TRP is transmitted in one slot. In scheme 4, multi-PDSCH from multi-TRP is transmitted in different slots.

Such a multi-TRP scenario allows for more flexible transmission control using a high quality channel.

In order to support intra-cell (having the same cell ID) and inter-cell (having different cell IDs) multi-TRP transmission based on a plurality of PDCCHs, one control resource set (CORESET) in PDCCH configuration information (PDCCH-Config) may correspond to one TRP, in RRC configuration information for a link between a PDCCH having a plurality of TRPs and a plurality of pairs of PDSCHs.

When at least one of Conditions 1 and 2 below is met, a UE may determine multi-DCI based multi-TRP. In this case, the TRP may be interpreted as a CORESET pool index.

### [Condition 1]

One CORESET pool index is configured.

### [Condition 2]

Two different values (for example, 0 and 1) of the CORESET pool index are configured.

When a condition below is met, the UE may determine single-DCI based multi-TRP. In this case, two TRPs may be interpreted as two TCI states indicated by means of a MAC CE/DCI.

### [Condition]

In order to indicate one or two TCI states for one code point of a TCI field in DCI, an "Enhanced TCI States Activation/Deactivation for UE-specific PDSCH MAC CE" is used.

DCI for common beam indication may be a UE-specific DCI format (for example, DL DCI format (for example, 1_1, 1_2), UL DCI format (for example, 0_1, 0_2)) or may be a UE-group common DCI format.

### (Multi-TRP PUSCH)

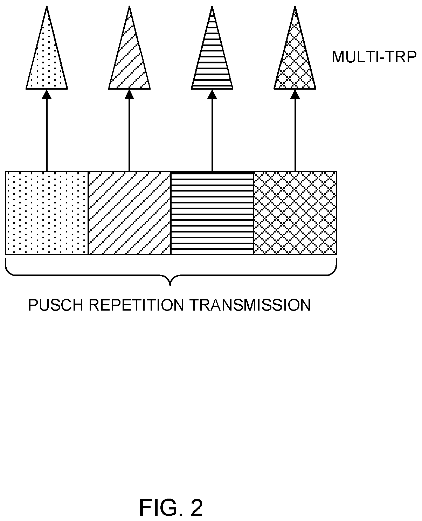

It is under study that a UE performs a UL transmission to one or a plurality of TRPs (see FIG. 2).

The plurality of TRPs may correspond to the same cell identifier (ID) or may correspond to different cell IDs. The cell ID(s) may be a physical cell ID(s) or may be a virtual cell ID(s).

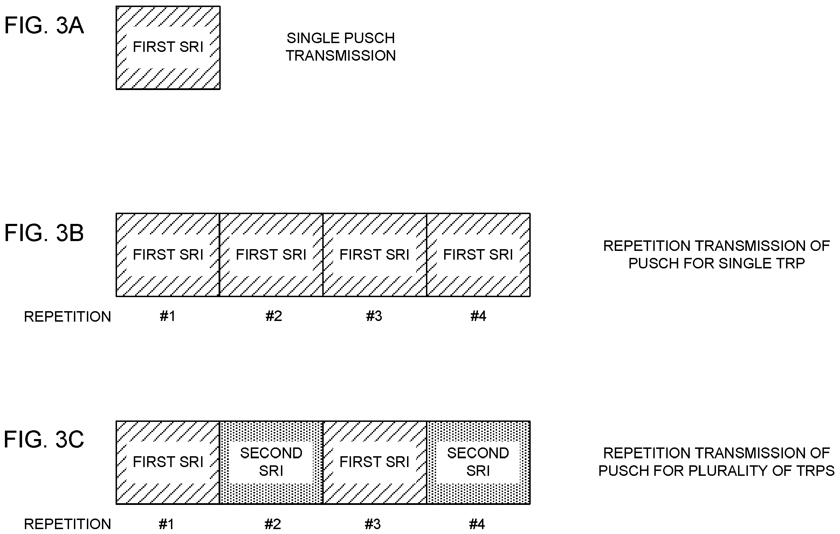

FIGS. 3A to 3C are diagrams to show examples of a single PUSCH transmission, repetition transmission of a PUSCH for a single TRP, and repetition transmission of a PUSCH for a plurality of TRPs. In the example shown in FIG. 3A, a UE performs a single PUSCH transmission by using a first SRI determined from a first SRI field. In the example shown in FIG. 3B, the UE performs repetition transmission of a PUSCH for a single TRP by using the first SRI determined from the first SRI field. In the example shown in FIG. 3C, the UE performs repetition transmission of a PUSCH for a plurality of TRPs by using the first SRI determined from the first SRI field and a second SRI determined from a second SRI field. For the repetition transmission of the PUSCH, the schedule may be controlled based on one piece of DCI.

It is under study that the DCI includes a field of one or two bits indicating single-TRP PUSCH repetition or multi-TRP PUSCH repetition.

It is under study that the multi-TRP PUSCH repetition is scheduled by a single piece of DCI. Here, it is under study that PUSCH repetition uses TDM, that two SRIs/two TPMIs/two power control parameters are configured/indicated, and that a different transmission in the PUSCH repetition has a different SRI/TPMI/power control parameter.

A mapping pattern of one or more SRIs (beams) for a plurality of times of PUSCH repetition may be defined.

The mapping pattern may be indicated by an SRI/SRI field/SRS resource/SRS resource set/TRP used for or corresponding to the PUSCH repetition transmission (for example, each PUSCH transmission). For example, when the repetition transmission for the plurality of TRPs is supported, a plurality of SRI fields may be notified/configured for the UE (or the plurality of SRI fields may be included in the DCI), or a plurality of SRS resources/SRS resource sets may be notified/configured for the UE.

Alternatively, one SRI field may be configured in the DCI, and the UE may, based on the SRI field, switch an SRS resource set/SRS resource to be used for each PUSCH transmission. For example, the UE may use a first SRS resource set/SRS resource (corresponding to the first SRI field) for PUSCH #1, and may use a second SRS resource set/SRS resource (corresponding to the first SRI field) for PUSCH #2.

In a mapping pattern applied to repetition transmission of a PUSCH for a plurality of TRPs, a plurality of SRIs/SRI fields (hereinafter, also simply expressed as SRIs) may cyclically correspond to a plurality of transmissions in repetition transmission. The mapping pattern may be referred to as cyclical mapping, a cyclical pattern, a cyclical correspondence, or the like.

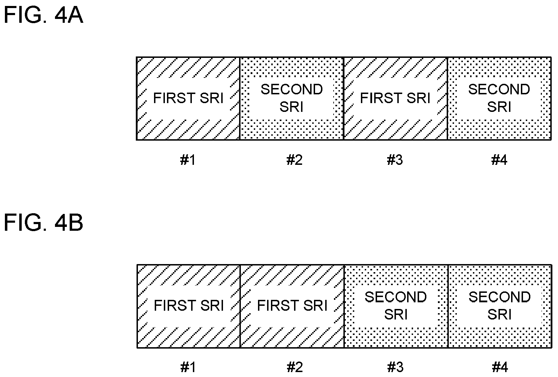

FIG. 4A is a diagram to show an example in which a plurality of SRIs and a plurality of transmissions in repetition transmission cyclically correspond to each other. In the example, with the number of times of repetition being four specified, the UE performs repetition transmission of a PUSCH by using a first SRI and second SRI. In the example, the UE cyclically performs a PUSCH transmission using the first SRI and a PUSCH transmission using the second SRI. For example, the first SRI may be used for odd-numbered transmissions in the repetition (repetition #1, #3), and the second SRI may be used for even-numbered transmissions in the repetition (repetition #2, #4) (for example, SRI #1, SRI #2, SRI #1, SRI #2).

Alternatively, in a mapping pattern (for example, second mapping pattern) applied to repetition transmission of a PUSCH for a plurality of TRPs, it may be determined that the plurality of SRIs (or SRI fields) correspond to each specific number of (for example, two) transmissions in repetition transmission sequentially. The mapping pattern may be referred to as sequential mapping, a sequential pattern, a sequential correspondence, or the like.

FIG. 4B is a diagram to show an example in which a plurality of SRIs and a plurality of transmissions in repetition transmission sequentially correspond to each other. In the example, with the number of times of repetition being four specified, the UE performs repetition transmission of a PUSCH by using a first SRI and second SRI. In the example, the UE sequentially performs a PUSCH transmission using the first SRI and a PUSCH transmission using the second SRI, two times each (for example, SRI #1, SRI #1, SRI #2, SRI #2).

Two SRS resource sets having a codebook (CB)/noncodebook (NCB) usage may be configured. For indication for a PUSCH to each TRP, two SRI fields/TPMI fields may exist.

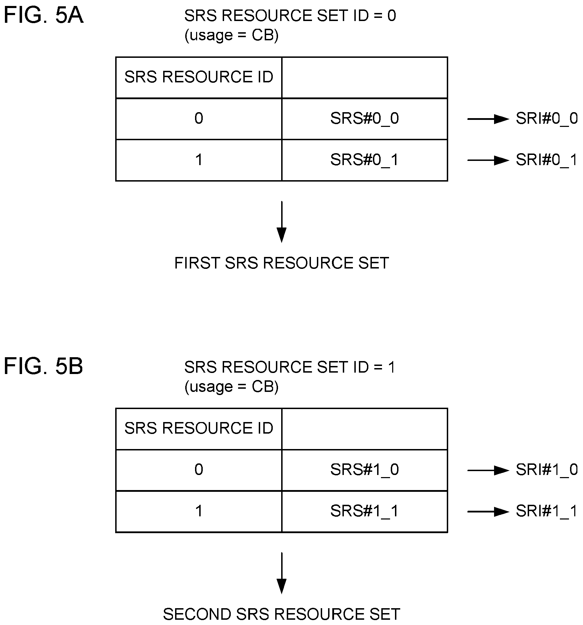

As the example in FIG. 5A, a first SRS resource set with usage = CB/NCB (for example, 1^{st} SRS resource set with usage = CB/NCB) may mean an SRS resource set having the minimum (or maximum) SRS resource set ID associated with usage = CB/NCB. As the example in FIG. 5B, a second SRS resource set with usage = CB/NCB (for example, 2^{nd} SRS resource set with usage = CB/NCB) may mean an SRS resource set having the second smallest (or second largest) SRS resource set ID associated with usage = CB/NCB.

FIG. 5A shows a case where the first SRS resource set corresponds to the minimum SRS resource set ID (here, SRS resource set ID = 0) associated with usage = CB. FIG. 5B shows a case where the second SRS resource set corresponds to the second smallest SRS resource set ID (here, SRS resource set ID = 1) associated with usage = CB. Each of SRS resource set ID = 0 and SRS resource set ID = 1 may include another SRS resource.

### (Multi-TRP PDCCH)

For reliability of multi-TRP PDCCH based on non-single frequency network (non-SFN), Studies 1 to 3 below are under study.
[Study 1] Coding/rate matching is based on one time of repetition, and the same coded bit is repeated in other times of repetition.
[Study 2] Each time of repetition includes the same number of control channel elements (CCEs) and the same coded bit and corresponds to the same DCI payload.
[Study 3] Two or more PDCCH candidates are explicitly linked to each other. A UE recognizes the link before decoding.

Choices 1-2, 1-3, 2, and 3 for PDCCH repetition as below are under study.

### [Choice 1-2]

Each of two sets of PDCCH candidates (in a given search space (SS) set) is associated with a respective one of two TCI states of a CORESET. Here, the same CORESET, the same SS set, and PDCCH repetition in different monitoring occasions are used.

### [Choice 1-3]

Each of two sets of PDCCH candidates is associated with a respective one of two SS sets. The both SS sets are associated with a CORESET, and each of the SS sets is associated with only one TCI state of the CORESET. Here, the same CORESET and two SS sets are used.

### [Choice 2]

One SS set is associated with two different CORESETs.

### [Choice 3]

Each of two SS sets is associated with a respective one of two CORESETs.

It is under study to support Study 3, for the non-SFN scheme and Study 2 and Choice 3.

For enhancement of multi-TRP PDCCH reliability, a multiplexing scheme as below is under study.
[FDM] Any of two sets of REG handles, a CCE of a PDCCH to be transmitted, two transmissions not overlapping (in frequency) with each other in PDCCH repetition, and a PDCCH transmitted on a plurality of occasions (multi-chance) not overlapping (in frequency) with each other is associated with a different TCI state.
[SFN] A PDCCH DMRS is associated with two TCI states in all the REGs/CCEs of a PDCCH.

It is under study that two linked SS sets for PDCCH repetition are configured by means of an RRC IE/MAC CE. It is under study that two linked PDCCH candidates for PDCCH repetition are two PDCCH candidates having the same aggregation level and same candidate index in the two linked SS sets.

### (PDCCH/CORESET configuration)

For configuration of PDCCH/CORESET in Rel. 15, Case 0 as below is provided.

### [Case 0]

One CORESET is configured with one TCI state, without a CORESET pool index (information related to TRP).

For enhancement of Rel. 16 regarding PDCCH/CORESET, Case 1 as below is provided.

### [Case 1]

For multi-DCI based multi-TRP, a CORESET pool index (information related to TRP) is configured for each CORESET (a CORESET pool index is associated with a certain CORESET).

For enhancement of Rel. 17 regarding PDCCH/CORESET, Case 2/3 as below is provided.

### [Case 2]

As enhancement of SFN, by means of an RRC IE/MAC CE, one CORESET is configured/activated with up to two TCI states (two TCI states are associated with a certain CORESET). The SFN may be used for both of high speed train (HST) and enhancement of reliability.

### [Case 3]

As enhancement of repetition, two PDCCH candidates in two search space (SS) sets are linked to PDCCH repetition, and each SS set is associated with a corresponding CORESET (two PDCCH candidates/two SS sets/two CORESETs are linked to). The two SS sets are associated with the same or different CORESET(s). One CORESET can be associated with up to one TCI state, by means of an RRC IE/MAC CE. When the two SS sets are associated with different CORESETs, the PDCCH repetition is multi-TRP repetition. When the two SS sets are associated with the same CORESET (same TCI state), the PDCCH repetition is single-TRP repetition.

### <Problem 1>

A problem is whether any of Cases 0 to 3 described above can be configured simultaneously (in combination) for a UE, as at least one of Cases A to D as below.
[Case A] Case 1 + 2
[Case B] Case 1 + 3
[Case C] Case 2 + 3
[Case D] Case 1 + 2 + 3

### <Problem 2>

A problem is whether enhancement related to a rule for configuration/determination of an RLM-RS/BFD-RS is needed for a case of each combination described above.

### <Problem 3>

A problem is whether enhancement related to handling of a QCL-type-D contention is needed for a case of each combination described above.

Whether any of these cases (PDCCH/CORESET) and a multi-TRP PUSCH can be configured simultaneously is not clear. Unless the configuration is appropriately performed, degradation in quality of notification, throughput reduction, and/or the like may occur.

In view of this, the inventors of the present invention came up with the idea of a method for configuration of a CORESET and PUSCH.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, a sequence, a list, a set, a group, a cluster, a subset, and the like may be interchangeably interpreted. In the present disclosure, "support," "control," "controllable," "operate," and "operable" may be interchangeably interpreted.

In the present disclosure, configuration (configure), activation (activate), update, indication (indicate), enabling (enable), specification (specify), and selection (select) may be interchangeably interpreted.

In the present disclosure, "link", "have a linkage", "associate", "correspond", "map", "repeat", and "relate" may be interchangeably interpreted. In the present disclosure, allocate, assign, monitor, and map may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer parameter, an RRC information element (IE), an RRC message, and a configuration may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state or QCL assumption, an RS of QCL type A in a TCI state / QCL assumption, a spatial relation, a spatial domain transmission filter, a UE spatial domain transmission filter, a UE transmit beam, a UL beam, a UL transmit beam, UL precoding, a UL precoder, a PL-RS, an antenna port, a panel group, and a beam group may be interchangeably interpreted. In the present disclosure, a QCL type X-RS, a DL-RS associated with QCL type X, a DL-RS having QCL type X, a DL-RS source, an SSB, a CSI-RS, and an SRS may be interchangeably interpreted.

In the present disclosure, a panel, an Uplink (UL) transmission entity, a TRP, a spatial relation, a control resource set (CORESET), a PDSCH, a codeword, a base station, an antenna port for a certain signal (for example, a demodulation reference signal (DMRS) port), an antenna port group for a certain signal (for example, a DMRS port group), a group for multiplexing (for example, a code division multiplexing (CDM) group, a reference signal group, or a CORESET group), a CORESET pool, a CORESET subset, a CW, a redundancy version (RV), and a layer (MIMO layer, transmission layer, spatial layer) may be interchangeably interpreted.

The Panel may be related to at least one of a group index of an SSB/CSI-RS group, a group index of group-based beam report, and a group index of an SSB/CSI-RS group for group-based beam report.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one code point in a TCI field may be interchangeably interpreted.

In the present disclosure, it may be assumed that a single PDCCH is supported when multi-TRP uses ideal backhaul. It may be assumed that multi-PDCCH is supported when multi-TRP uses non-ideal backhaul.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The name is not limited to these.

In the present disclosure, a single-TRP, a single-TRP system, a single-TRP transmission, and a single-PDSCH may be interchangeably interpreted. In the present disclosure, multi-TRP, multi-TRP system, multi-TRP transmission, and multi-PDSCH may be interchangeably interpreted. In the present disclosure, single DCI, a single PDCCH, multi-TRP based on single DCI, and two TCI states in at least one TCI codepoint being activated may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, one CORESET pool index (CORESETPoolIndex) value being not configured for any CORESET and any codepoint of a TCI field being not mapped to two TCI states may be interchangeably interpreted.

In the present disclosure, multi-TRP, a channel using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted. In the present disclosure, multi-TRP based on single DCI and at least one codepoint in a TCI field being mapped to two TCI states may be interchangeably interpreted.

In the present disclosure, TRP #1 (first TRP, TRP #0) may correspond to CORESET pool index = 0, may correspond to another CORESET configured with no CORESET pool index when a certain CORESET is configured with CORESET pool index = 1, or may correspond to the first TCI state of two TCI states corresponding to one code point in a TCI field. TRP #2 (second TRP, TRP #1) may correspond to CORESET pool index = 1, or may correspond to the second TCI state of two TCI states corresponding to one code point in a TCI field.

In the present disclosure, a plurality of SS sets (SS set pairs) having a linkage (coupling, cooperation), linked SS sets, may mean that one SS set is linked to the other SS set through an RRC IE/MAC CE, for PDCCH repetition. An SS set (individual SS set) having no linkage may mean that the SS set is not linked to another SS set through(via) an RRC IE/MAC CE.

In the present disclosure, "have a linkage", "be linked", and "pair" may be interchangeably interpreted. In the present disclosure, "have no linkage", "be not linked", and "individual" may be interchangeably interpreted.

In the present disclosure, linked SS sets, linked CORESETs, linked PDCCH candidates/PDCCHs, a CORESET associated with linked SS sets, and a PDCCH candidate/PDCCH in linked SS sets may be interchangeably interpreted. In the present disclosure, two linked CORESETs may mean two CORESETs each of which is associated with a respective one of two linked SS sets. In the present disclosure, two linked PDCCH candidates/PDCCHs may be two PDCCH candidates/PDCCHs having the same aggregation level and same candidate index in two linked SS sets.

In the present disclosure, receiving a DL signal (PDSCH/PDCCH) using SFN may mean at least one of using the same time and frequency resources and receiving the same data (PDSCH) or control information (PDCCH), in reception from a plurality of TRPs. Receiving a DL signal using SFN may mean at least one of using the same time and frequency resources and receiving the same data or control information, in reception using a plurality of TCI states/spatial domain filter/beam/QCL.

In the present disclosure, spatial relation information (SRI), a combination of SRIs, SRI for codebook-based transmission, a combination of non-codebook-based SRIs, spatialRelationInfo, UL TCI, TCI state, Unified TCI, QCL, and the like may be interchangeably interpreted.

In the present disclosure, a first TRP and a second TRP may be interchangeably interpreted as a first PUSCH and a second PUSCH, a first PUSCH transmission occasion and a second PUSCH transmission occasion, first SRI and second SRI, and the like.

In the following embodiments, repetition transmission of a PUSCH for a plurality of TRPs may be interchangeably interpreted as a PUSCH over a plurality of TRPs, a repetition PUSCH over a plurality of TRPs, a repetition PUSCH simply, repetition transmission, a plurality of PUSCH transmissions, and the like. A single PUSCH transmission for a single TRP may be referred to as a single PUSCH transmission simply, a PUSCH transmission in a single TRP, and the like.

In the present disclosure, repetition transmission of a PUSCH for a single TRP may mean repetition transmission of a plurality of PUSCHs transmitted using the same SRI/beam/precoder.

In the present disclosure, repetition transmission of a PUSCH for a plurality of TRPs may mean repetition transmission of a plurality of PUSCHs transmitted using a plurality of different SRIs/beams/precoders. As described in the mapping pattern above in detail, the repetition transmission may correspond to the plurality of SRIs/beams/precoders cyclically, correspond to each specific number of SRIs/beams/precoders sequentially, or correspond using a half-half pattern (mapping).

In the present disclosure, multi-TRP PUSCH repetition, multi-TRP PUSCH repetition in Rel. 17, a plurality of times of PUSCH repetition for a plurality of TRPs, and single-DCI based multi-TRP PUSCH repetition may be interchangeably interpreted.

In the present disclosure, the first TRP (for example, TRP #0, CORESET pool index = 0) and the second TRP (for example, TRP #1, CORESET pool index = 1) may correspond to a first spatial relation (for example, 1^{st} spatial relation)/beam/UL TCI/QCL and a second spatial relation/beam/UL TCI/QCL, respectively. Alternatively, the first TRP and second TRP may correspond to a spatial relation/beam/UL TCI/QCL associated with a first SRI field or first TPMI field and a spatial relation/beam/UL TCI/QCL associated with a second SRI field or second TPMI field, respectively. Alternatively, the first TRP and second TRP may correspond to a first SRS resource set with CB/NCB usage (for example, usage = CB/NCB) and a second SRS resource set with CB/NCB usage (for example, usage = CB/NCB), respectively.

In the embodiments in the present disclosure, an example of a case is mainly described in which the number of each of the plurality of TRPs, the plurality of SRIs, and the like is two, but the number may be three or more.

The embodiments in the present disclosure are also applicable as appropriate to repetition transmission of any UL signal/channel for a plurality of TRPs. A PUSCH in the present disclosure may be interpreted as any UL signal/channel. For example, the embodiments in the present disclosure are also applicable as appropriate to repetition transmission of a PUCCH for a plurality of TRPs. A PUSCH in the present disclosure may be interpreted as a PUCCH.

### (Radio Communication Method)

In the present disclosure, indication of multi-TRP PUSCH repetition may be two fields/values for indication information of at least one of an SRI (SRS resource indicator), a TPMI/transmission rank (precoding information and number of layers), a TPC (TPC command for scheduled PUSCH), an OLPC (open-loop power control parameter set indication), and a phase tracking reference signal (PTRS)-demodulation reference signal (DMRS) association (PTRS-DMRS association), in the DCI.

An RRC IE of at least one of multi-TRP PUSCH repetition and the presence of two fields for the indication information may be configured. The RRC IE may be configured per at least one of serving cell, CORESET, search space (SS) set, BWP, and PUSCH configuration (PUSCH-Config).

In the present disclosure, SRI #1, a first SRI, a first SRI field, a first value in an SRI field, and a first value associated with a code point in an SRI field may be interchangeably interpreted. In the present disclosure, SRI #2, a second SRI, a second SRI field, a second value in an SRI field, and a second value associated with a code point in an SRI field may be interchangeably interpreted.

In the present disclosure, an SRI field, a precoding information (TPMI) and number-of-layer field, a TPC command field, an OLPC parameter set indication field, and a PTRS-DMRS association field may be interchangeably interpreted.

A UE may receive configuration information (for example, RRC IE/MAC CE) related to one or more TCI states/CORESET pool indices for one or more CORESETs.

In Case 3/B/C/D, the UE may receive configuration information (for example, RRC IE/MAC CE) related to two linked SS sets/CORESETs/PDCCHs.

### <First Embodiment>

Any one of Options 1 and 2 as below may be applied to a combination of Case 1 and multi-TRP PUSCH repetition.

### <<Option 1»

A combination of Case 1 and multi-TRP PUSCH repetition is not supported.

When a CORESET pool index is configured for a serving cell (or a BWP in the serving cell), a UE may follow at least one of Configuration Methods 1 to 4 as below.

### [Configuration Method 1]

Any CORESET in the serving cell (or the BWP in the serving cell) cannot be configured with indication of multi-TRP PUSCH repetition. The indication of multi-TRP PUSCH repetition may be two SRI/TPMI/TPC/OLPC/PTRS-DMRS fields in DCI.

### [Configuration Method 2]

Any SS set in the serving cell (or the BWP in the serving cell) cannot be configured with indication of multi-TRP PUSCH repetition. The indication of multi-TRP PUSCH repetition may be two SRI/TPMI/TPC/OLPC/PTRS-DMRS fields in DCI.

### [Configuration Method 3]

The serving cell (or the BWP in the serving cell) cannot be configured with indication of multi-TRP PUSCH repetition. The indication of multi-TRP PUSCH repetition may be two SRI/TPMI/TPC/OLPC/PTRS-DMRS fields in DCI.

### [Configuration Method 4]

The SRS resource set may follow at least one of Choices 1 and 2 as below.

### [[Choice 1]]

Only one SRS resource set having CB/NCB usage can be configured.

### [[Choice 2]]

Two SRS resource sets having CB/NCB usage can be configured. Each of the two SRS resource sets corresponds to a respective one of two CORESET pool indices. Only one SRI is indicated in the DCI.

Option 1 described above makes it clear that a combination of Case 1 and multi-TRP PUSCH repetition is not supported.

### <<Option 2»

A combination of Case 1 and multi-TRP PUSCH repetition is supported.

A UE may follow at least one of Options 2-1 to 2-3 as below.

### <<Option 2-1>>

When a CORESET pool index is configured (for any (at least one) CORESET) for a serving cell (or a BWP in the serving cell), a UE may follow at least one of Configuration Methods 1 to 4 as below.

### [Configuration Method 1]

Any CORESET in the serving cell (or the BWP in the serving cell) can be configured with indication of multi-TRP PUSCH repetition.

### [Configuration Method 2]

Any SS set in the serving cell (or the BWP in the serving cell) can be configured with indication of multi-TRP PUSCH repetition.

### [Configuration Method 3]

The serving cell (or the BWP in the serving cell) can be configured with indication of multi-TRP PUSCH repetition.

### [Configuration Method 4]

Only two SRI fields corresponding to the same SRS resource set are supported. The SRS resource sets may follow at least one of Choices 1 and 2 as below.

### [[Choice 1]]

Only one SRS resource set having CB/NCB usage can be configured. Both of the two SRI fields correspond to the one SRS resource set.

### [[Choice 2]]

Two SRS resource sets having CB/NCB usage can be configured.
Each of the two SRS resource sets corresponds to a respective one of two CORESET pool indices. Both of the two SRI fields correspond to the same SRS resource set corresponding to a CORESET pool index of a PDCCH.

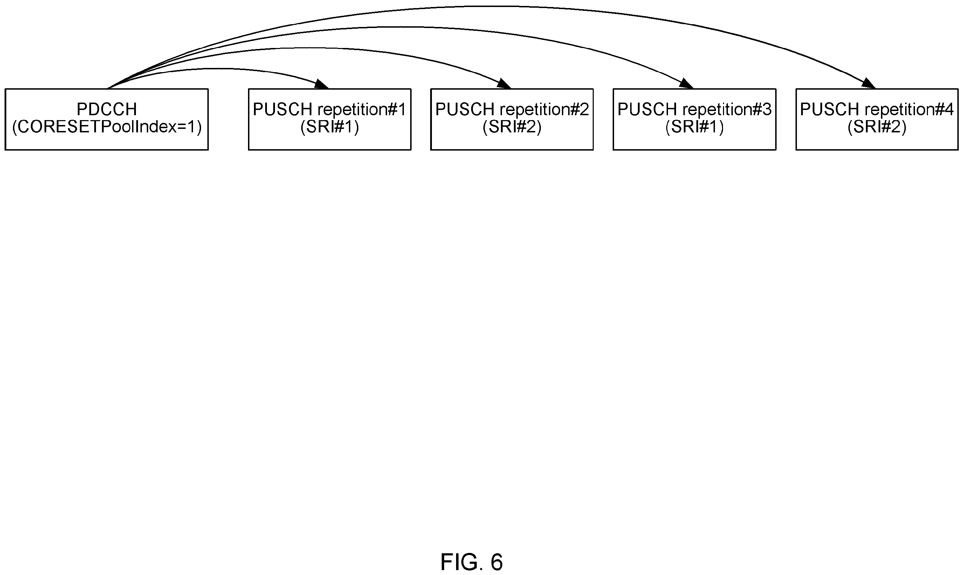

In Option 2-1, an example in FIG. 6 may be supported. In the example, on a PDCCH corresponding to CORESET pool index = 1, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

In Option 1, the example described above need not be supported.

### <<Option 2-2>>

When a CORESET pool index is configured (for any CORESET) for a serving cell (or a BWP in the serving cell), a UE may follow at least one of Configuration Methods 1 and 2 as below.

### [Configuration Method 1]

For one CORESET explicitly configured with a CORESET pool index, the CORESET or an SS set associated with the CORESET cannot be configured with indication of multi-TRP PUSCH repetition.

### [Configuration Method 2]

For one CORESET not explicitly configured with a CORESET pool index, the CORESET or an SS set associated with the CORESET can be configured with indication of multi-TRP PUSCH repetition.

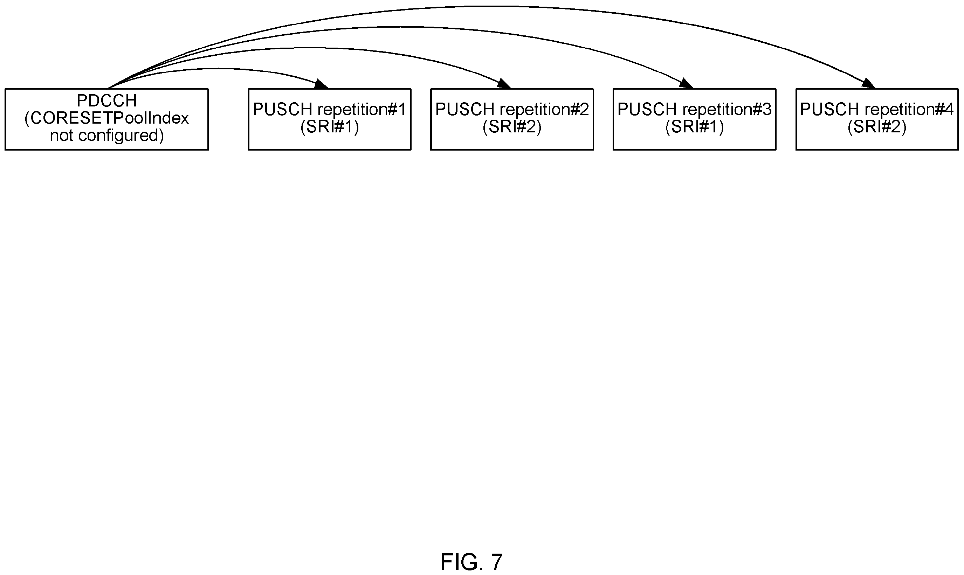

In Option 2-2, an example in FIG. 7 may be supported, without the example in FIG. 6 supported. In the example, on a PDCCH in a CORESET not configured with a CORESET pool index, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

### <<Option 2-3>>

When a CORESET pool index is configured (for any (at least one) CORESET) for a serving cell (or a BWP in the serving cell), only one specific TRP transmits DCI for multi-TRP repetition (a PDCCH from one specific CORESET pool index is transmitted).

For example, the specific TRP may correspond to CORESET pool index = 0 (the specific CORESET pool index may be CORESET pool index = 0). Only a CORESET or SS set associated with CORESET pool index = 0 may transmit the DCI for multi-TRP repetition.

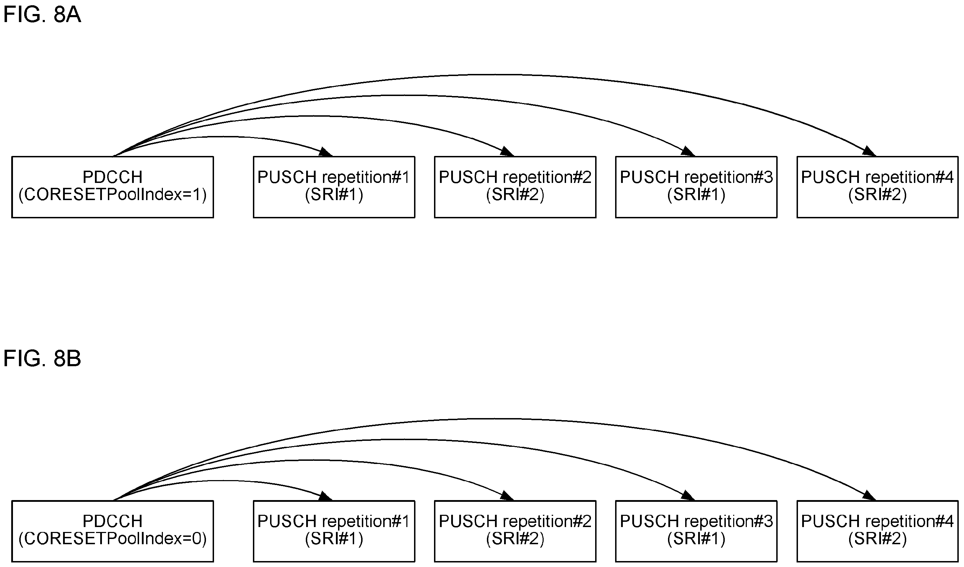

When the specific TRP corresponds to CORESET pool index = 0, an example in FIG. 8A need not be supported. In the example, on a PDCCH in a CORESET configured with CORESET pool index = 1, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

When the specific TRP corresponds to CORESET pool index = 0, an example in FIG. 8B may be supported. In the example, on a PDCCH in a CORESET configured with CORESET pool index = 0, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

For example, the specific TRP may correspond to CORESET pool index = 1 (the specific CORESET pool index may be CORESET pool index = 1). Only a CORESET or SS set associated with CORESET pool index = 1 may transmit the DCI for multi-TRP repetition.

When the specific TRP corresponds to CORESET pool index = 1, the example in FIG. 8A may be supported and the example in FIG. 8B may not be supported.

Option 2 described above allows an operation for a combination of Case 1 and multi-TRP PUSCH repetition to be clear.

### <Second Embodiment>

Any one of Options 1 and 2 as below may be applied to a combination of Case 2 and multi-TRP PUSCH repetition.

### <<Option 1>>

A combination of Case 2 and multi-TRP PUSCH repetition is not supported.

For a CORESET configured/activated with two TCI states, the CORESET or an SS set associated with the CORESET cannot be configured with indication of multi-TRP PUSCH repetition.

Option 1 described above makes it clear that a combination of Case 2 and multi-TRP PUSCH repetition is not supported.

### <<Option 2>>

A combination of Case 2 and multi-TRP PUSCH repetition is supported.

For a CORESET configured/activated with two TCI states, the CORESET or an SS set associated with the CORESET can be configured with indication of multi-TRP PUSCH repetition.

The default QCL/spatial relation of a plurality of times of PUSCH repetition for two TRPs may follow two TCI states of a PDCCH.

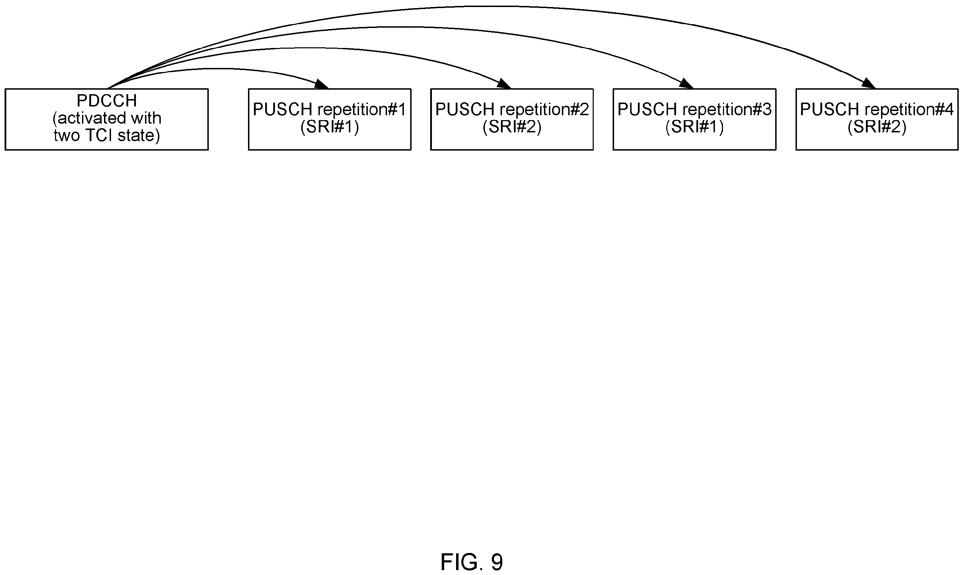

In Option 2, an example in FIG. 9 may be supported. In the example, on a PDCCH in a CORESET activated with two TCI states, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

In Option 1, the example described above need not be supported.

Option 2 described above allows an operation for a combination of Case 2 and multi-TRP PUSCH repetition to be clear.

### <<Variation 1>>

When a CORESET (PDCCH/DCI in the CORESET) having a CORESET pool index (configured with the CORESET pool index) schedules PUSCH repetition, the PUSCH repetition is affected by the CORESET pool index of the CORESET to schedule. For example, an SRI/TPMI field to be used for each transmission in PUSCH repetition may be based on the CORESET pool index of the CORESET to schedule.

An SRI for a first (odd-numbered (first, third, ...)) transmission in PUSCH repetition may correspond to an SRI/TPMI field associated with the CORESET pool index (TRP index).

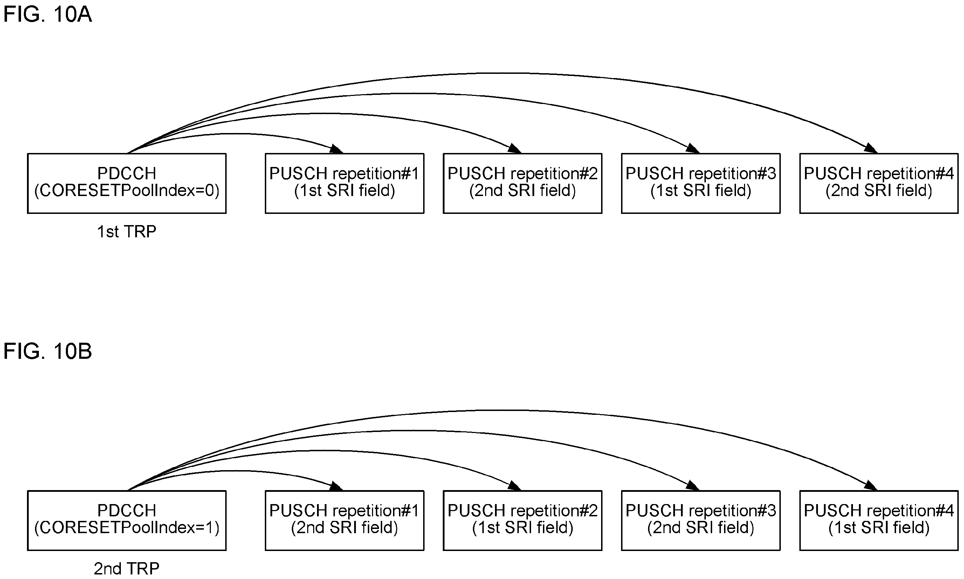

In an example in FIG. 10A, on a PDCCH (PDCCH from a first TRP (TRP #0)) in a CORESET configured with CORESET pool index = 0, DCI that schedules PUSCH repetitions #1 to #4 is transmitted. The DCI includes two SRI fields. PUSCH repetition #1 of the first is based on a first SRI field (uses a beam (spatial relation) indicated in the first SRI field) corresponding to CORESET pool index = 0 (first TRP) corresponding to the PDCCH. PUSCH repetition #2 is based on a second SRI field (uses a beam (spatial relation) indicated in the second SRI field) corresponding to CORESET pool index = 1 (second TRP) different from the PDCCH.

Thereafter, the mapping of the SRI fields (beams) for the PUSCH repetition is repeated. In other words, PUSCH repetition #3 is based on the first SRI field as PUSCH repetition #1 is. PUSCH repetition #4 is based on the second SRI field as PUSCH repetition #2 is.

In an example in FIG. 10B, on a PDCCH (PDCCH from a second TRP (TRP #1)) in a CORESET configured with CORESET pool index = 1, DCI that schedules PUSCH repetitions #1 to #4 is transmitted. The DCI includes two SRI fields. PUSCH repetition #1 of the first is based on a second SRI field (uses a beam (spatial relation) indicated in the second SRI field) corresponding to CORESET pool index = 1 (second TRP) corresponding to the PDCCH. PUSCH repetition #2 is based on a first SRI field (uses a beam (spatial relation) indicated in the first SRI field) corresponding to CORESET pool index = 0 (first TRP) different from the PDCCH.

Thereafter, the mapping of the SRI fields (beams) for the PUSCH repetition is repeated. In other words, PUSCH repetition #3 is based on the second SRI field as PUSCH repetition #1 is. PUSCH repetition #4 is based on the first SRI field as PUSCH repetition #2 is.

The variation allows overhead for indication of mapping order of beams to be decreased.

### <<Variation 2>>

When a CORESET (PDCCH/DCI in the CORESET) having no CORESET pool index (not configured with a CORESET pool index) schedules PUSCH repetition, the PUSCH repetition may be based on a CORESET pool index of the CORESET to schedule. For example, an SRI/TPMI field to be used for each transmission in repetition is affected by the CORESET pool index of the CORESET to schedule (affected by the fact of no CORESET pool index). In this case, the PUSCH repetition may be single-TRP PUSCH repetition (PUSCH repetition using the same beam (spatial relation)).

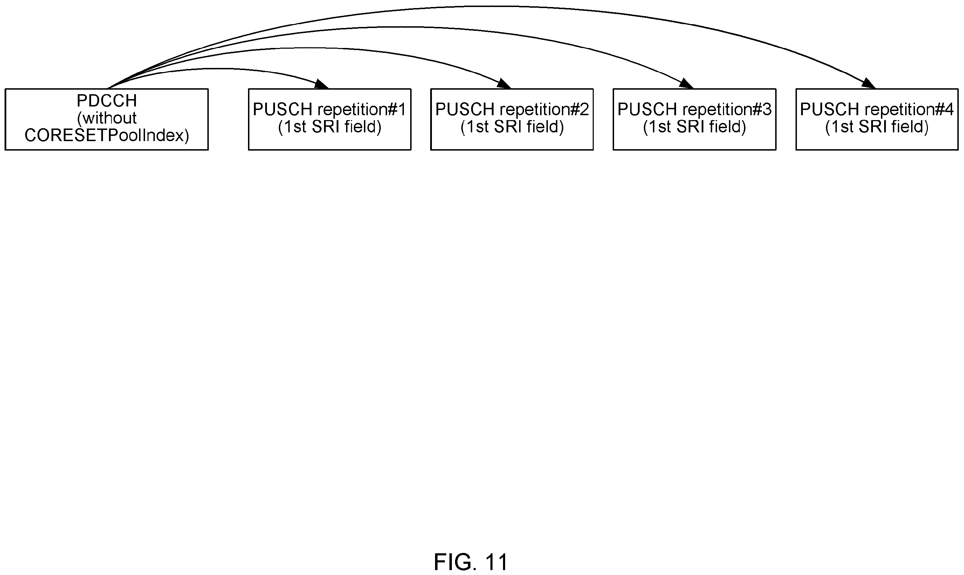

In an example in FIG. 11, on a PDCCH in a CORESET not configured with a CORESET pool index, DCI that schedules PUSCH repetitions #1 to #4 is transmitted. The DCI may include one or two SRI fields. Each of PUSCH repetitions #1 to #4 is based on a first SRI field (uses a beam (spatial relation) indicated in the first SRI field).

The variation allows a beam for each transmission in PUSCH repetition to be appropriately determined, even when no CORESET pool index is configured.

### <<Variation 3>>

When a CORESET (PDCCH/DCI in the CORESET) having a CORESET pool index (configured with the CORESET pool index) schedules PUSCH repetition, the PUSCH repetition is affected by the CORESET pool index of the CORESET to schedule. The PUSCH repetition scheduled using the CORESET having the CORESET pool index may be single-TRP PUSCH repetition (PUSCH repetition using the same beam (spatial relation)).

For a codebook PUSCH, when the PUSCH is scheduled using CORESET pool index = 0, a first SRI field and an SRS resource set having CB usage (usage = CB) and having a first ID from the lowest (minimum) or highest (maximum) ID may be used. When the PUSCH is scheduled using CORESET pool index = 1, a second SRI field and an SRS resource set having CB usage (usage = CB) and having a second ID from the lowest (minimum) or highest (maximum) ID may be used. When single-TRP is indicated, a first TPMI field may be used.

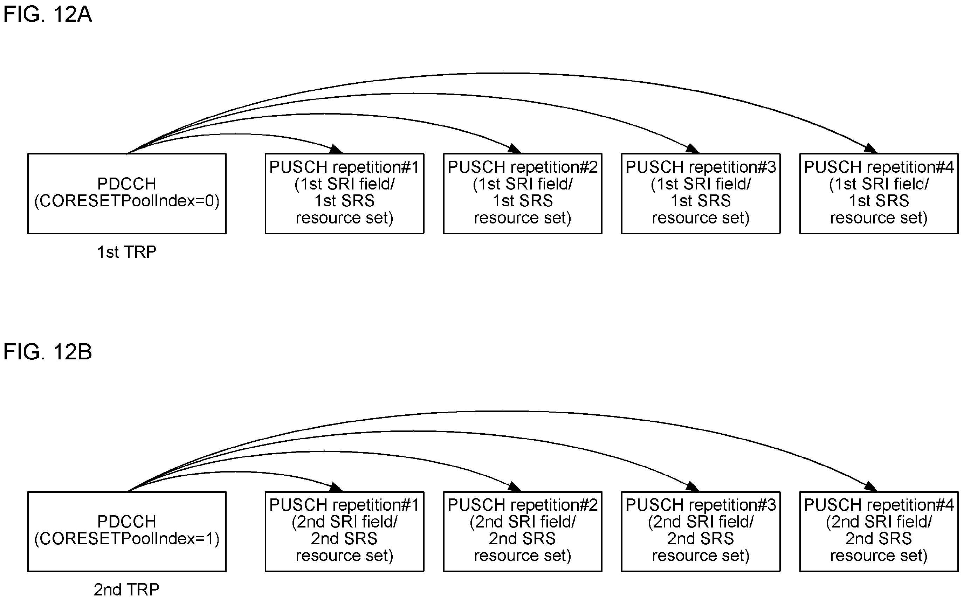

In an example in FIG. 12A, on a PDCCH (PDCCH from a first TRP) in a CORESET configured with CORESET pool index = 0, DCI that schedules PUSCH repetitions #1 to #4 is transmitted. The DCI may include one or two SRI fields. Each of PUSCH repetitions #1 to #4 is based on a first SRI field/first SRS resource set (uses a beam (spatial relation) indicated in the first SRI field/first SRS resource set).

In an example in FIG. 12B, on a PDCCH (PDCCH from a second TRP) in a CORESET configured with CORESET pool index = 1, DCI that schedules PUSCH repetitions #1 to #4 is transmitted. The DCI may include two SRI fields. Each of PUSCH repetitions #1 to #4 is based on a second SRI field/second SRS resource set (uses a beam (spatial relation) indicated in the second SRI field/second SRS resource set).

For a noncodebook PUSCH, when the PUSCH is scheduled using CORESET pool index = 0, the first SRI field and the SRS resource set having NCB usage (usage = NCB) and having a first ID from the lowest (minimum) or highest (maximum) ID may be used. When the PUSCH is scheduled using CORESET pool index = 1, the second SRI field and the SRS resource set having NCB usage (usage = NCB) and having a second ID from the lowest (minimum) or highest (maximum) ID may be used.

The variation allows a beam for PUSCH repetition for a single-TRP to be appropriately determined, when a CORESET pool index is configured.

### <Third Embodiment>

Any one of Options 1 and 2 as below may be applied to a combination of Case 3 and multi-TRP PUSCH repetition.

### <<Option 1»

A combination of Case 3 and multi-TRP PUSCH repetition is not supported.

For linked SS sets/CORESETs configured for PDCCH repetition, the linked SS sets/CORESETs cannot be configured with indication of multi-TRP PUSCH repetition.

Option 1 described above makes it clear that a combination of Case 3 and multi-TRP PUSCH repetition is not supported.

### <<Option 2>>

A combination of Case 3 and multi-TRP PUSCH repetition is supported.

For linked SS sets/CORESETs configured for PDCCH repetition, the linked SS sets/CORESETs can be configured with indication of multi-TRP PUSCH repetition.

Indication related to timings for a plurality of transmissions in PUSCH repetition may follow indication from a reference PDCCH. The reference PDCCH may refer to, from among two linked PDCCHs, earlier or later one PDCCH in time, may refer to one PDCCH of the first or last in time, may refer to a PDCCH corresponding to the highest or lowest CORESET ID, or may refer to a PDCCH corresponding to the highest or lowest SS set ID.

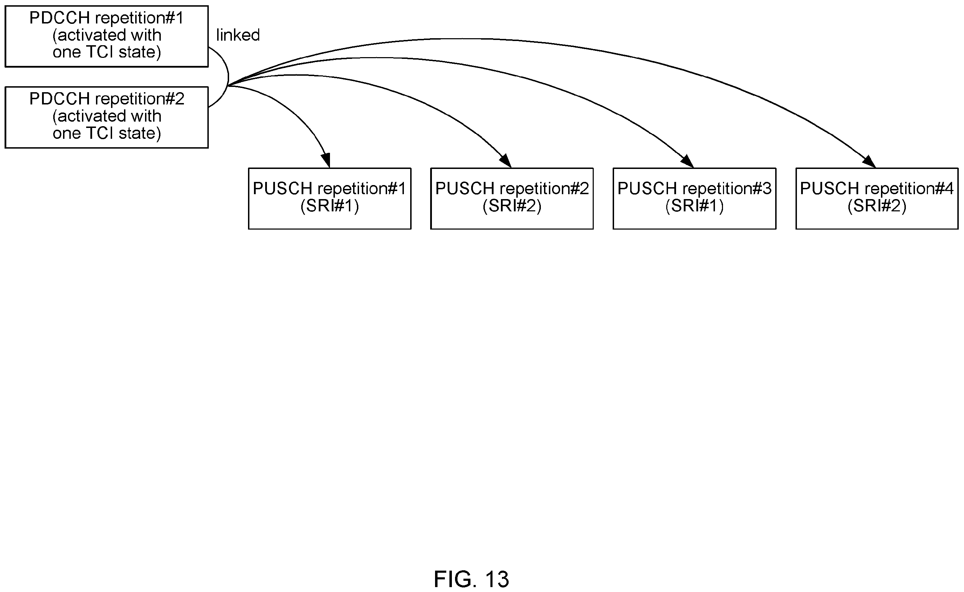

In Option 2, an example in FIG. 13 may be supported. In the example, PDCCH repetitions #1 and #2 (two CORESETs/SS sets corresponding to PDCCH repetitions #1 and #2) are linked to each other. Each of the two CORESETs may be activated with one TCI state. On PDCCH repetitions #1 and #2, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

In Option 1, the example described above need not be supported.

Option 2 described above allows an operation for a combination of Case 3 and multi-TRP PUSCH repetition to be clear.

### <Fourth Embodiment>

Any one of Options 1 and 2 as below may be applied to a combination of Case B (Case 1 + 3) and multi-TRP PUSCH repetition.

### <<Option 1>>

When a CORESET pool index is configured (for any (at least one) CORESET in a certain serving cell (or a BWP in the serving cell)) and a same CORESET pool index is configured for two linked CORESETs for PDCCH repetition, the two linked CORESETs/SS sets cannot be configured with indication of multi-TRP PUSCH repetition.

The first embodiment may be applied to CORESETs/SS sets not linked (having no linkage).

Regarding an SRS resource set, Option 1 of the first embodiment may be applied.

Option 1 described above makes it clear that a combination of Case B and multi-TRP PUSCH repetition is not supported.

### <<Option 2>>

When a CORESET pool index is configured (for any (at least one) CORESET in a certain serving cell (or a BWP in the serving cell)) and a same CORESET pool index is configured for two linked CORESETs for PDCCH repetition, the two linked CORESETs/SS sets can be configured with indication of multi-TRP PUSCH repetition.

The first embodiment may be applied to CORESETs/SS sets not linked (having no linkage).

Regarding an SRS resource set, Option 2-1 of the first embodiment may be applied.

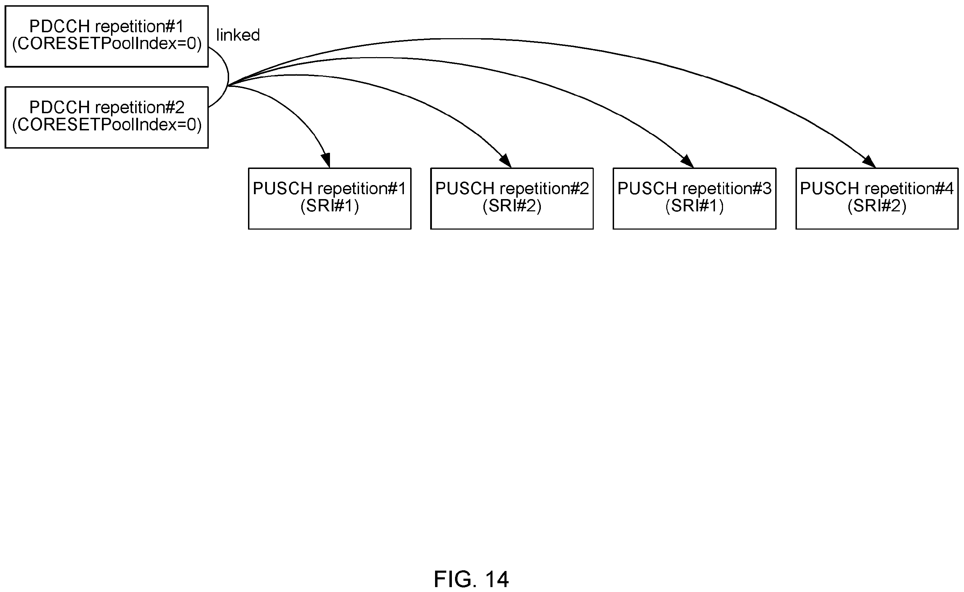

In Option 2, an example in FIG. 14 may be supported. In the example, PDCCH repetitions #1 and #2 (two CORESETs/SS sets corresponding to PDCCH repetitions #1 and #2) are linked to each other. The two CORESETs corresponding to PDCCH repetitions #1 and #2 are configured with same CORESET pool index = 0. On each of PDCCH repetitions #1 and #2, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

In Option 1, the example described above need not be supported.

Only when CORESET pool index = 0 is configured for both the two linked CORESETs for PDCCH repetition, the two linked CORESETs/SS sets may be able to be configured with indication of multi-TRP PUSCH repetition.

Only when CORESET pool index = 1 is configured for both the two linked CORESETs for PDCCH repetition, the two linked CORESETs/SS sets may be able to be configured with indication of multi-TRP PUSCH repetition.

Option 2 described above allows an operation for a combination of Case B and multi-TRP PUSCH repetition to be clear.

### <Fifth Embodiment>

Any one of Options 1 and 2 as below may be applied to a combination of Case B (Case 1 + 3) and multi-TRP PUSCH repetition.

### <<Option 1>>

When a CORESET pool index is configured (for any (at least one) CORESET in a certain serving cell (or a BWP in the serving cell)) and each of two different CORESET pool indices is configured for a respective one of two linked CORESETs for PDCCH repetition, the two linked CORESETs/SS sets cannot be configured with indication of multi-TRP PUSCH repetition.

The first embodiment may be applied to CORESETs/SS sets not linked (having no linkage).

Option 1 described above makes it clear that a combination of Case B and multi-TRP PUSCH repetition is not supported.

### <<Option 2>>

When a CORESET pool index is configured (for any (at least one) CORESET in a certain serving cell (or a BWP in the serving cell)) and each of two different CORESET pool indices is configured for a respective one of two linked CORESETs for PDCCH repetition, the two linked CORESETs/SS sets can be configured with indication of multi-TRP PUSCH repetition.

The first embodiment may be applied to CORESETs/SS sets not linked (having no linkage).

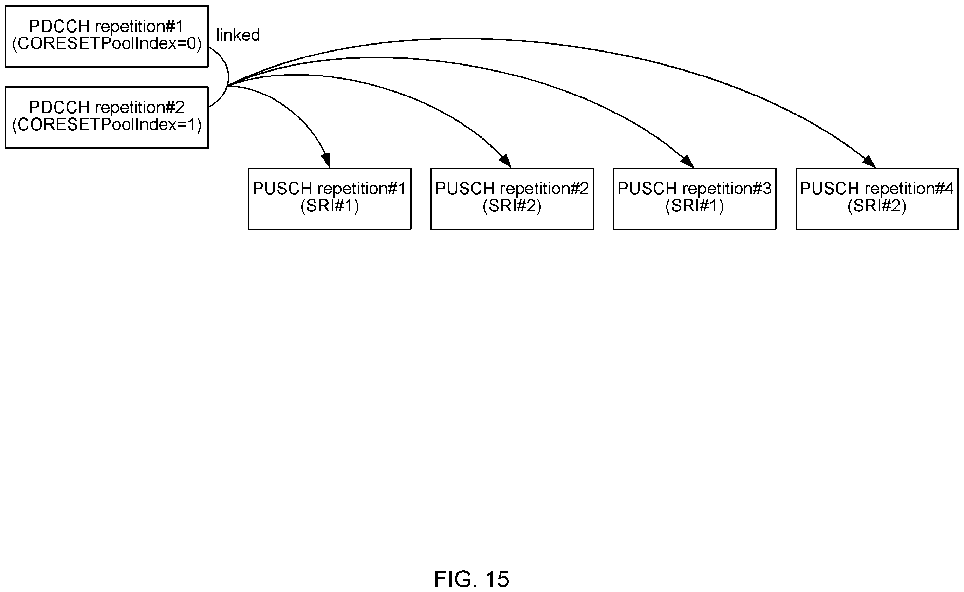

In Option 2, an example in FIG. 15 may be supported. In the example, PDCCH repetitions #1 and #2 (two CORESETs/SS sets corresponding to PDCCH repetitions #1 and #2) are linked to each other. A CORESET corresponding to PDCCH repetition #1 is configured with CORESET pool index = 0, and a CORESET corresponding to PDCCH repetition #2 is configured with CORESET pool index = 1. On each of PDCCH repetitions #1 and #2, DCI that schedules PUSCH repetitions #1 to #4 is transmitted. In the DCI, the first SRI field indicates SRI #1 and the second SRI field indicates SRI #2. Each of PUSCH repetitions #1 and #3 corresponds to SRI #1 and each of PUSCH repetitions #2 and #4 corresponds to SRI #2.

In Option 1, the example described above need not be supported.

Option 2 described above allows an operation for a combination of Case B and multi-TRP PUSCH repetition to be clear.

### <Sixth Embodiment>

This embodiment relates to a combination of Case B (Case 1 + 3) and multi-TRP PUSCH repetition.

When two linked CORESETs for PDCCH repetition are configured with a same CORESET pool index, the fourth embodiment (Option 1 or 2) may be applied.

When Option 1 of the fourth embodiment is applied, the example in FIG. 14 described above need not be supported. When Option 2 of the fourth embodiment is applied, the example in FIG. 14 described above may be supported.

When each of two different CORESET pool indices is configured for a respective one of two linked CORESETs for PDCCH repetition, the fifth embodiment (Option 1 or 2) may be applied.

When Option 1 of the fifth embodiment is applied, the example in FIG. 15 described above need not be supported. When Option 2 of the fifth embodiment is applied, the example in FIG. 15 described above may be supported.

The embodiment allows an operation for a combination of Case B and multi-TRP PUSCH repetition to be clear.

### <Seventh Embodiment>

This embodiment relates to a combination of Case C (Case 2 + 3) and multi-TRP PUSCH repetition.

When a certain CORESET, having no linkage, is activated with two TCI states and is configured with a same CORESET pool index, the second embodiment (Option 1 or 2) may be applied.

When Option 1 of the second embodiment is applied, the example in FIG. 9 described above need not be supported. When Option 2 of the second embodiment is applied, the example in FIG. 9 described above may be supported.

When two CORESETs are linked to each other for PDCCH repetition and each of the two CORESETs is activated with one TCI state, the third embodiment (Option 1 or 2) may be applied.

When Option 1 of the third embodiment is applied, the example in FIG. 13 described above need not be supported. When Option 2 of the third embodiment is applied, the example in FIG. 13 described above may be supported.

The embodiment allows an operation for a combination of Case C and multi-TRP PUSCH repetition to be clear.

### <Eighth Embodiment>

This embodiment relates to whether the embodiments described above are applied to a configured grant PUSCH.

When dynamic multi-TRP PUSCH repetition based on any one of the embodiments described above is not supported, configured grant multi-TRP PUSCH repetition may follow any one of Choices 1 to 4 as below.

### [Choice 1]

Configured grant multi-TRP PUSCH repetition of both of type 1 and type 2 cannot be configured/indicated.

### [Choice 2]

Configured grant multi-TRP PUSCH repetition of both of type 1 and type 2 can be configured/indicated.

### [Choice 3]

Configured grant multi-TRP PUSCH repetition of type 1 can be configured/indicated. Configured grant multi-TRP PUSCH repetition of type 2 cannot be configured/indicated.

### [Choice 4]

Configured grant multi-TRP PUSCH repetition of type 2 can be configured/indicated. Configured grant multi-TRP PUSCH repetition of type 1 cannot be configured/indicated.

In the present disclosure, supporting the configured grant multi-TRP PUSCH repetition of type 1/type 2 may mean a prescription as below.

### [Prescription]

- For the configured grant multi-TRP PUSCH repetition of type 1 or type 2, a second field is introduced in configured grant configuration (ConfiguredGrantConfig), the second field being of P0-α (p0-PUSCH-Alpha) and a power control loop to use (powerControlLoopToUse).
- For the configured grant multi-TRP PUSCH repetition of type 1, a second field is introduced in RRC configured UL grant (rrc-ConfiguredUplinkGrant), the second field being of a pathloss reference index (pathlossReferenceIndex), an SRS resource indicator (srs-ResourceIndicator), and precoding and the number of layers (precodingAndNumberOfLayers).
- For the configured grant multi-TRP PUSCH repetition of type 1, two SRIs/TPMIs/TPCs/OLPCs/PTRS-DMRSs are indicated, through DCI for activation.

This embodiment makes it clear whether any one of the embodiments described above is applied to the configured grant multi-TRP PUSCH repetition.

### <Other Embodiments>

A higher layer parameter (RRC information element)/UE capability corresponding to at least one function (characteristic, feature) in the embodiments may be prescribed. The UE capability may indicate whether to support the function.

A UE configured with the higher layer parameter corresponding to the function may perform the function. "A UE not configured with the higher layer parameter corresponding to the function does not perform the function (for example, applying an operation in Rel. 15/16)" may be prescribed.

A UE having reported a UE capability indicating the support of the function may perform the function. "A UE having not reported a UE capability indicating the support of the function does not perform the function (for example, applying an operation in Rel. 15/16)" may be prescribed.

When a UE reports a UE capability indicating the support of the function and a higher layer parameter corresponding to the function is configured for the UE, the UE may perform the function. "When a UE does not report a UE capability indicating the support of the function or a higher layer parameter corresponding to the function is not configured for the UE, the UE does not perform the function (for example, applying an operation in Rel. 15/16)" may be prescribed.

The UE capability may indicate at least one of the followings:
- Whether to support Option 2 of the first to fifth embodiments/Variation 1/Variation 2/Variation 3;
- Whether to support the sixth/seventh/eighth embodiment;
- Whether to support Case A;
- Whether to support Case B;
- Whether to support Case C;
- Whether to support Case D.

With the UE capability/higher layer parameter described above, the UE can implement the function described above while securing compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

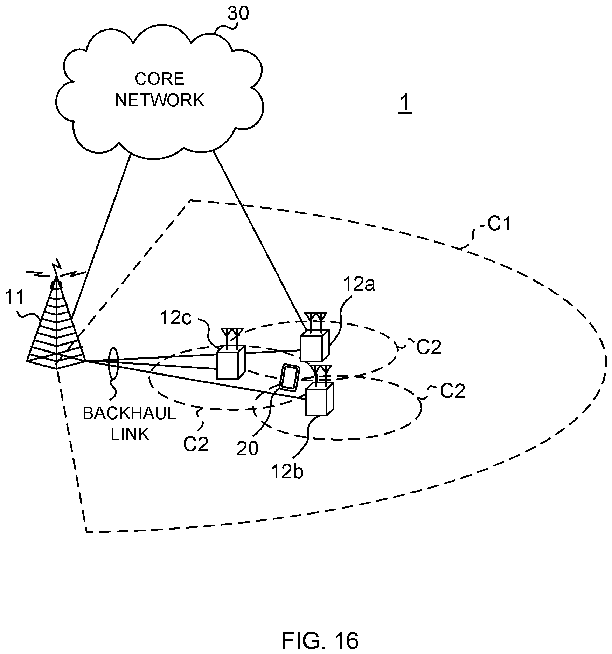

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (sounding reference signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

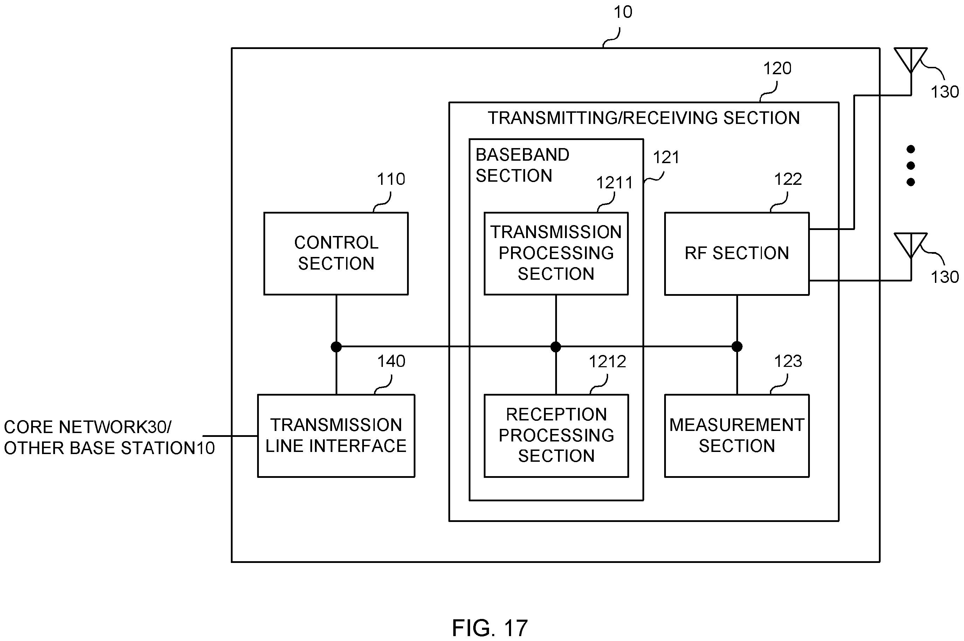

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit configuration information (for example, RRC IE/MAC CE) related to one or more transmission configuration indication (TCI) states for one or more control resource sets (CORESETs) and transmit, using the one or more CORESETs, downlink control information scheduling a plurality of times of physical uplink shared channel repetition. The control section 110 may control reception of the plurality of times of physical uplink shared channel repetition on the basis of two values of parameters in the downlink control information.

The transmitting/receiving section 120 may transmit configuration information (for example, RRC IE/MAC CE) related to two linked search space sets and transmit, using the two linked search space sets, downlink control information scheduling a plurality of times of physical uplink shared channel repetition. The control section 110 may control reception of the plurality of times of physical uplink shared channel repetition on the basis of two values of parameters in the downlink control information.

### (User Terminal)

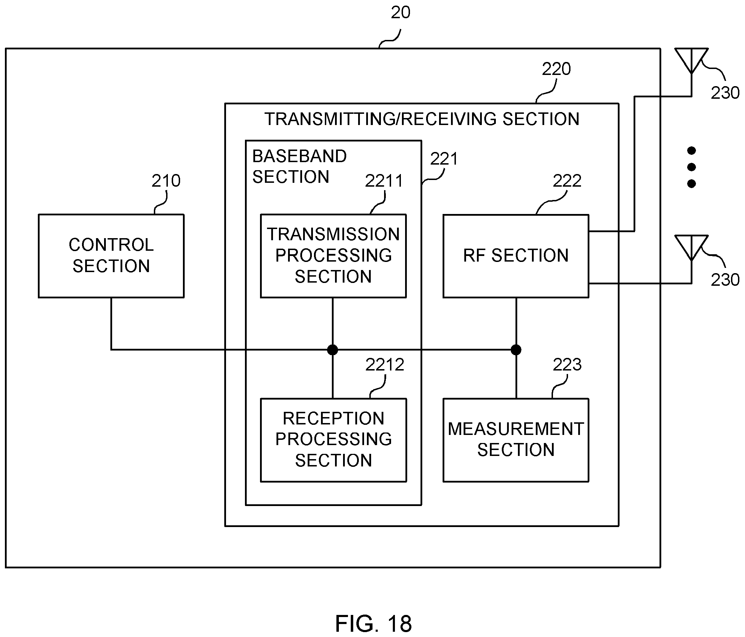

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information (for example, RRC IE/MAC CE) related to one or more transmission configuration indication (TCI) states for one or more control resource sets (CORESETs) and receive, using the one or more CORESETs, downlink control information scheduling a plurality of times of physical uplink shared channel repetition. The control section 210 may control transmission of the plurality of times of physical uplink shared channel repetition on the basis of two values of parameters in the downlink control information.

The two values may be two fields in a sounding reference signal indicator, and the control section 210 may map the two fields to the plurality of times of physical uplink shared channel repetition.

The configuration information may indicate two TCI states for one CORESET (Option 2 in the first embodiment).

The configuration information may indicate a CORESET pool index for one CORESET (Option 2 in the second embodiment/Variation 1/Variation 3).

The transmitting/receiving section 220 may receive configuration information (for example, RRC IE/MAC CE) related to two linked search space sets and receive, using the two linked search space sets, downlink control information scheduling a plurality of times of physical uplink shared channel repetition. The control section 210 may control transmission of the plurality of times of physical uplink shared channel repetition on the basis of two values of parameters in the downlink control information (Option 2 in the third embodiment).

The two values may be two fields in a sounding reference signal indicator, and the control section 210 may map the two fields to the plurality of times of physical uplink shared channel repetition.

One same CORESET pool index may be configured for two CORESETs each associated with a respective one of the two linked search space sets (Option 2 in the fourth embodiment).

Two different CORESET pool indices may be configured for two CORESETs each associated with a respective one of the two linked search space sets (Option 2 in the fifth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

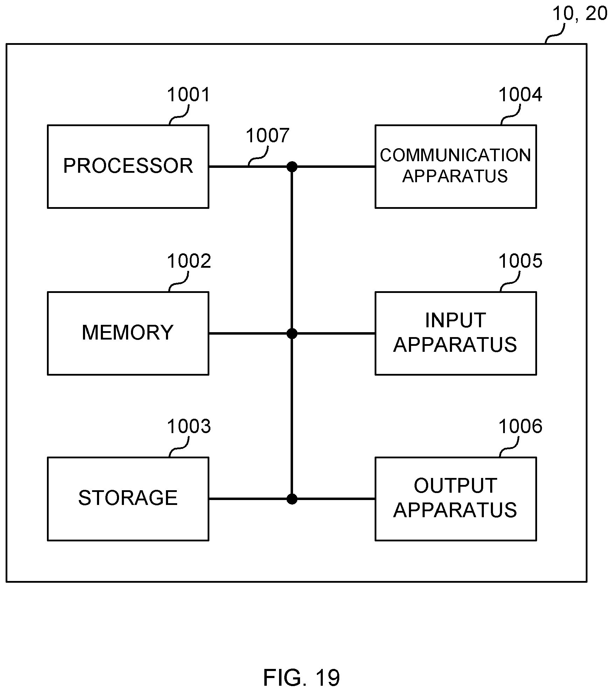

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information related to one or more transmission configuration indication (TCI) states for one or more control resource sets (CORESETs) and receives, using the one or more CORESETs, downlink control information scheduling a plurality of times of physical uplink shared channel repetition; and
a control section that controls transmission of the plurality of times of physical uplink shared channel repetition on the basis of two values of parameters in the downlink control information.

2. The terminal according to claim 1, wherein
the two values are two fields in a sounding reference signal indicator, and
the control section maps the two fields to the plurality of times of physical uplink shared channel repetition.

3. The terminal according to claim 1 or 2, wherein
the configuration information indicates two TCI states for one CORESET.

4. The terminal according to claim 1 or 2, wherein
the configuration information indicates a CORESET pool index for one CORESET.

5. A radio communication method for a terminal, the radio communication method comprising:
receiving configuration information related to one or more transmission configuration indication (TCI) states for one or more control resource sets (CORESETs) and receiving, using the one or more CORESETs, downlink control information scheduling a plurality of times of physical uplink shared channel repetition; and
controlling transmission of the plurality of times of physical uplink shared channel repetition on the basis of two values of parameters in the downlink control information.

6. A base station comprising:
a transmitting section that transmits configuration information related to one or more transmission configuration indication (TCI) states for one or more control resource sets (CORESETs) and transmits, using the one or more CORESETs, downlink control information scheduling a plurality of times of physical uplink shared channel repetition; and
a control section that controls reception of the plurality of times of physical uplink shared channel repetition on the basis of two values of parameters in the downlink control information.
